Europäisches Patentamt

European Patent Office

Office européen des brevets

(11) Publication number: **0 032 777**
**B1**

# EUROPEAN PATENT SPECIFICATION

(45) Date of publication of patent specification: **05.12.84**

(21) Application number: **81200065.1**

(22) Date of filing: **20.01.81**

(51) Int. Cl.³: **C 08 F 2/38,** C 08 F 8/34, B 01 J 31/20, C 10 M 1/38 // C08F10/00

---

(30) Priority: **21.01.80 NL 8000362**

(43) Date of publication of application: **29.07.81 Bulletin 81/30**

(45) Publication of the grant of the patent: **05.12.84 Bulletin 84/49**

(84) Designated Contracting States: **DE FR GB IT NL**

(56) References cited: **US-A-3 919 187** **US-A-4 014 910**

(73) Proprietor: **AKZO N.V. Velperweg 76 NL-6824 BM Arnhem (NL)**

(72) Inventor: **De Klein, Willem Jan Hoflaan 12 NL-6953 AM Dieren (NL)** Inventor: **Vis, Jan Vondellaan 116 NL-6901 ML Zevenaar (NL)**

(74) Representative: **Sieders, René et al P.O. Box 314 NL-6800 AH Arnhem (NL)**

The file contains technical information submitted after the application was filed and not included in this specification

Courier Press, Leamington Spa, England.

## 0 032 777

**Description**

The invention relates to a process for the preparation of sulphur-containing additives for use in lubricant compositions, in which process an organic carboxylic acid, an ester and/or amide derived therefrom is/are sulphurized, and to lubricant compositions into which these additives are incorporated.

A process for the preparation of sulphur-containing additives for use in lubricant compositions is described inter alia in United States Patent Specifications 2 855 366 and 3 919 187.

According to the processes described therein an organic unsaturated acid and/or ester is/are treated at elevated temperature with sulphur, sulphur chloride, hydrogen sulphide, phosphorus pentasulphide and/or phosphorus sesquisulphide.

According to said known processes care should be taken to avoid an unduly great increase in the degree of unsaturation of the starting materials, because sulphurization often leads to products whose viscosity is generally too high for use in lubricant compositions and whose solubility in mineral oils is too small. It was therefore proposed that the sulphurization be carried out in the presence of one or more saturated compounds, particularly for adjusting the degree of unsaturation of the reaction mixture.

The present invention provides a process for the preparation of sulphur containing additives for use in lubricant compositions displaying an even more favourable viscosity behaviour and a very much enhanced solubility in mineral oil fractions.

The invention consists in that in a process of the type indicated above as known the carboxylic acid or the acid from which the ester and/or amide are/is derived is obtained by reaction under inert conditions of an ethylenically unsaturated compound in the presence of an at least trivalent manganese compound with a carbonyl compound whose alpha-carbon atom carries at least one hydrogen atom, with the proviso that

a. the carbonyl compound contains at least 60% by weight of a carboxylic anhydride;

b. a trivalent manganese compound is present in an amount of $10^{-3}$ to $10^{-10}$ mole per liter;

c. the molar ratio of the converted amount of ethylenically unsaturated compounds to said trivalent manganese compound is at least 4.

It should be added that a process for preparing carboxlyic acids by reacting an ethylenically unsaturated compound with a carboxylic anhydride in the presence of a trivalent manganese compound was known from United States Patent Specification 4 014 910. As said process is said to be attended with the formation of saturated (ar)alkane carboxylic acids, it was not to be expected that a mixture of said acids and/or derivatives thereof would be suitable for use in a process for the preparation of sulphur-containing additives.

A great advantage to the use of the process according to the present invention is that it is applied to fully synthetic starting materials, which on the one hand make it possible to obtain a more flexible production process and on the other to obtain a product of constant quality.

As examples of carbonyl compounds that are suitable to be used in carrying out the process according to the invention may be mentioned the anhydrides of the following acids: acetic acid, propionic acid, octanoic acid, phenylpropionic acid and stearic acid.

The acids may, of course, also carry substituents, provided that the carbon atom, which is in the alpha-position relative to the carbonyl radical, carries at least one hydrogen atom.

For practical reasons preference is given to the anhydrides of the lower fatty acids such as acetic acid and isobutyric acid, because they can be easily separated from the reaction mixture by distillation. The process for the preparation of the organic monocarboxylic acids can be carried out in various ways. In order to prevent the greatly reduced concentration of the at least trivalent manganese compound from causing the concentration of the ethylenically unsaturated compound to be reduced to such a degree that condition c of the invention is no longer met, it is preferred that the trivalent manganese compound should be added gradually to the reaction mixture. While this manganese compound is added, the carboxylic compound obtained will separate in the form of an anhydride without undesirable byproducts being formed as a result of side-reactions. By properly mixing the reaction mixture it is possible, because of the high reaction rate, to obtain a high degree of conversion per unit volume of the reactor, in spite of the low concentration of the manganese compound.

The concentration of the ethylenically unsaturated compound should be so chosen that the molar ratio of the converted amount of ethylenically unsaturated compounds to said trivalent manganese compound is at least 4. Under some circumstances a two-phase system may be formed then, with the concentration of the ethylenically unsaturated compound in the reaction medium ranging from 0,005 to 0,5 moles per litre.

The usual procedure consists in that part of the ethylenically unsaturated compound is previously introduced into the reaction mixture to a concentration of 0,1 to 0,5 moles per litre and the remaining amount is added gradually to the reaction mixture together with the manganese compound.

In order that the formation of byproducts may as much as possible be prevented it is recommended that the Manganese III concentration should be chosen as low as possible. An important additional advantage to the process according to the invention is that over 95% of the divalent manganese compound formed in the reaction can be removed by simple filtration.

2

The temperature at which the reaction proceeds at a reasonable speed is in the range of 50° to 250°C. A favourable embodiment of the process according to the invention consists in that at least 90% of the carbonyl compound is present in the form of acetic anhydride and use is made of manganic acetate as initiator at a temperature between 100° and 140°C. The ethylenically unsaturated compounds that are suitable to be used for the preparation of the carboxylic acids include both aliphatic and cycloaliphatic hydrocarbons having C=C bonds. Optionally, they may carry substituents, such as a halogen atom, for instance chlorine or bromine; a cyano group; an alkoxy group or a methylene alkoxy group; an acetoxy group or a methylene acetoxy group and aryl groups substituted or not with the above-envisaged substituents. As examples of suitable starting materials may be mentioned the olefins having 2 to 42 carbon atoms, such as ethylene, propylene, 1-butylene, 3-methyl-1-butylene, 1-hexene, 1-octene, 1-dodecene, 2-dodecene, 1-hexadecene and 1-octadecene; cyclohexene, cyclooctene; allyl benzene. There also may be present several ethylenically unsaturated groups per molecule, as in cyclohexadiene. Preference is given to the $\alpha$-olefins having 6 to 26 carbon atoms in combination with acetic anhydride as acid anhydride.

Under these conditions the molar ratio of olefin to manganic acetate is preferably in the range of 4 to 10.

Under these last-mentioned conditions there is obtained a mixture of straight-chain and branched-chain acids which is suitable to be sulphurized to very valuable additives for use in lubricant compositions. It has been found that favourable results are obtained generally if the sulphurization is carried out in the presence of sulphur. This method is moreover particularly simple to carry out from a technological point of view. A favourable embodiment of the process consists in that an amount of organic acid, ester or amide is brought into reaction with molten sulphur, with nitrogen being passed through for about 2,5 hours at a temperature of 180°.

As soon as the waste gas no longer contains any $H_2S$, it is allowed to cool to about 80°C, followed by applying a vacuum in order to complete the removal of volatile sulphur compounds.

A variant of this procedure consists in heating an amount of acid, ester and/or amide to about 195°C in an atmosphere of nitrogen.

After all of the sulphur has been added, the temperature is kept at this value for a number of hours (for instance 5 hours). Subsequently, it is brought down to 150°C and air is passed through for 12 hours. The amount of sulphur thus introduced into the compounds may vary from 1 to over 20 per cent by weight, depending on the type of starting material and the amount of sulphur in the reaction medium.

Additives containing such amounts of sulphur are excellently suitable to be used in lubricating oils, fats and cutter fluids.

Products generally having favourable physical properties are obtained if the esters subjected to the sulphurization reaction are derived from an acid prepared in the way indicated above and a phenol and/or an aromatic alocohol and/or an aliphatic alcohol having 1 to 50 carbon atoms and 1 to 10 primary or secondary hydroxyl groups and/or a cycloaliphatic alcohol containing 6 to 20 carbon atoms and/or a polyalkylene oxide glycol having 2 to 50 alkylene oxide units having a carbon to oxygen ratio of 2,0 to 4,3. Suitable phenols from which the esters may be derived comprise phenol, cresol, xylenol, mesitol, durenol, thymol, naphthol, resorcinol, hydroquinone, bisphenols such as 4,4'-oxydiphenol, 4,4'-isopropylidene diphenol, 4,4'-methylene diphenol and biphenyl-4,4'-diol. They may be substituted optionally with alkyl groups, alkoxy groups or halogen.

As suitable aromatic alcohols may be mentioned benzyl alcohol, tolyl alcohol (=methylphenyl carbinol), phenethyl alcohol, salicyl alcohol, 2-naphthalene ethanol, phenylpropyl alcohol and cinnamyl alcohol.

Suitable aliphatic hydroxyl compounds from which the esters may be derived comprise monohydric alcohols, di- or higher polyhydric alcohols and ether alcohols, which may be mono- or polyfunctional. Examples of suitable alcohols include methanol, ethanol, n-propanol, isopropanol, n-butanol, t-butanol, iso-amyl alcohol, n-hexanol, 2-ethylhexanol, n-octanol, isodecanol, capryl alcohol, lauryl alcohol, myristyl alcohol, cetyl alcohol, stearyl alcohol and oxo alcohols such as tridecyl alcohol, which substantially consists of tetramethyl-1-nonanol and hexadecyl alcohol which consists of a composite mixture of primary alcohols and may be characterized as 2,2-dialkyl ethanols in which the alkyl groups substantially consists of methyl-branched $C_6$ and $C_8$ radicals.

Also esters from ether alcohols are suitable to be used in the preparation of the sulphurized products according to the invention. The ether alcohols may be mono- or polyfunctional and contain from 2 to 8 condensed polyol units. Examples of suitable ether alcohols include diethylene glycol, triethylene glycol, tetraethylene glycol, diethylene glycol monomethyl ether, diethylene glycol monoethyl ether, triethylene glycol monomethyl ether, butoxyethanol, butylene glycol monobutyl ether, dipentaerythritol, tripentaerythritol, tetrapentaerythritol, diglycerol, triglycerol, tetraglycerol, penta-glycerol, hexaglycerol, heptaglycerol and octaglycerol.

As examples of a cycloaliphatic alcohol may be mentioned cyclohexanol and the alkyl-substituted derivatives thereof. Particularly satisfactory products are found to be obtained if they are prepared from esters derived from a branched-chain aliphatic alcohol having 2 to 4 primary hydroxyl groups. In this connection it should be mentioned that favourable properties are obtained as a result of the sulphurization of esters of which the aliphatic polyalcohol is neopentyl glycol. Other products having exceptionally good properties are obtained if the sulphurization is applied to esters of trimethylol ethane or dipentaearythritol.

Sulphurization is preferably applied to esters derived from the aliphatic polyalcohols trimethylol propane and pentaerythritol in view of the resulting high thermal stability. It should be added that the esterification need not be complete. It has been found that a high hydroxyl number leads to products that have an excellent dispersing effect. Also the rheological properties of such a type of product are found to be very favourable.

Under some circumstances preference is given to compounds having a relatively high sulphur content of, say 5 to 20 per cent by weight.

As usual generally, the free sulphur content should again be as low as possible.

To this end the invention provides a process in which into the reaction mixture there is still incorporated a compound containing ethylenically unsaturated groups. This may be a compound like oleic acid, as mentioned in the above-discussed United States Patent Specification 2 855 366. Use may also be made of an ester derived from an acid prepared by the process according to the invention and an alcohol having one or more ethylenically unsaturated groups.

It has been found that favourable results are obtained by using allyl alcohol as ethylenically unsaturated alcohol. The preparation of the esters that are suitable to be used in the process according to the invention is effected by esterification in a known manner of an alcohol or a mixture of alcohols with one or more of the acids prepared by the above indicated process. In addition, other branched or straight-chain acids may be present. The esterification reaction may be carried out in the usual manner. The reaction is heated in the presence or not of a catalyst at a temperature in the range of 100° to 300°C, with the water evolved in the reaction being carried off. The esterification is usually carried out at a temperature in the range of 140° to 280°C.

Optionally, use may be made of an esterification catalyst. This may be an acid such as sulphuric aid, phosphoric acid, alkylene arylsulphonic acids such as p-toluene sulphonic acid and methane sulphonic acid, and a variety of metal compounds such as dibutyl tin oxide, tetrabutyl titanate, zinc acetate, stannous oxalate, iron oxide, ferric stearate, manganous stearate, cobalt (II) stearate and manganous acetate.

The amount of catalyst is generally 0,1 to 1% by weight, based on the reaction mixture. If desired, use may be made of an inert diluent, such as benzene, toluene or xylene, which together with water forms an azeotrope. In the process use is generally made of stoichiometric amounts of acid and alcohol, although in the esterification with volatile alcohols also use may be made of an excess thereof.

Upon completion of the reaction the excess is removed by distillation. Esterification may take place at atmospheric pressure, but it also may be carried out at reduced pressure (2—50 mm Hg).

Under such conditions the excess alcohol and water can be removed readily upon completion of the reaction. The resulting esters, after having been mixed or not with an ethylenically unsaturated compound may be directly subjected to the sulphurization process. Under some circumstances however, it may be advisable also to apply a purification step, for instance by treating the compositions with bleaching earth, ozone, peroxide, hypochlorite or some other suitable bleaching agent. The preparation also may include a treatment with active carbon. The esters derived from aliphatic monoalcohols having 1 to 8 carbon atoms and a monocarboxylic acid prepared from an alpha-olefin having 6 to 12 carbon atoms may be purified for instance by distillation.

Depending on the application envisaged it will generally not be difficult for a man skilled in the art to select such parameters as will guarantee the best possible results. Being able to choose from a great many alternatives, he will generally be guided by the available starting materials and accordingly decide on the definitive process conditions. Also amides derived from the acids prepared in the above-indicated way are excellently suitable to be sulphurized to suitable additives for use in lubricant compositions.

The preparation may be carried out by direct reaction of the acid with the amine, but also by first converting the acid into acid chloride with, for instance, thionyl chloride or phosphorus trichloride or phosphorus pentachloride, after which the acid chloride is added to the amine in the presence of a base, such as an aqueous sodium hydroxide solution or pyridine.

Another attractive method of preparing the amides from the acids prepared in the above-mentioned way is characterized by a direct reaction of the acid or mixture of acids and the equivalent amount of a 1 or more isocyanate groups-containing compound or mixtures thereof. Using isocyanate groups-containing compounds instead of amino groups-containing compounds offers the additional advantages that the reaction proceeds at a higher rate and as by product only the readily separating carbon dioxide is formed. The isocyanates to be used in the preparation of amides may be of an aliphatic or aromatic character. If little or no coloured products are desired, preference is given to aliphatic isocyanates. Preference is further given to isocyanates having the general formula A—$R_1$—NCO, where $R_1$ represents a cyclo(aliphatic) hydrocarbon having at least 6 carbon atoms, a phenyl group or a naphthyl group, which groups may be substituted or not with one or more lower alkyl groups having 1 to 8, and preferably 1 to 6 carbon atoms, lower alkoxy groups having 1 to 8, and preferably 1 to 6 carbon atoms, aryl, for instance phenyl and halogen such as chlorine or bromine, and A represents an —NCO, or —R$_2$—(CH$_2$—R$_3$—NCO)$_n$—R$_4$NCO group, wherein R$_2$ has the meaning of a single bond or an aliphatic hydrocarbon group having 1 to 4 carbon atoms, n is equal to 0 or higher and R$_3$ and R$_4$ may be the same or different and may or may not have the same meaning as R$_1$.

Examples of suitable monoisocyanates include ethyl isocyanate, hexyl isocyanate, 2-ethylhexyl isocyanate, butylene stearyl isocyanate.

As examples of diisocyanates of the formula OCNRNCO, where R represents a divalent aliphatic, cycloaliphatic or aromatic group, may be mentioned:

hexamethylene diisocyanate;
dimethyl hexamethylene diisocyanate;
trimethyl hexamethylene diisocyanate;
metaxylylene diisocyanate;
paraxylylene diisocyanate;
tetramethylene diisocyanate.

In the case where R$_1$ represents an aromatic group, it may, for instance, be substituted with a halogen, a lower alkyl or a lower alkoxy group.

Examples of such diisocyanates include:
1-chloro-2,4-phenylene diisocyanate;
2,4-toluene diisocyanate;
a mixture of 2,4-toluene and 2,6-toluene diisocyanate;
tetramethylphenylene diisocyanate;
diphenylmethane-4,4'-diisocyanate;
metaphenylene diisocyanate;
paraphenylene diisocyanate;
naphthalene-1,5-diisocyanate;
diphenyl-4,4'-diisocyanate;
diphenyl methane-4,4'-diisocyanate;
4,4'-isopropylidene diphenyl isocyanate;
benzophenone-4,4'-diisocyanate;
diphenylether diisocyanate or diphenyl sulphide diisocyanate;
3,3'-dimethyldiphenyl-4,4'-diisocyanate;
3,3'-dimethoxydiphenyl-4,4'-diisocyanate;
3,3'-dichlorodiphenyl-4,4'-diisocyanate;
benzofuran-2,7-diisocyanate.

Examples of diisocyanates having a cycloaliphatic group include isophoron diisocyanate, dicyclohexyl methane diisocyanate and 1,4-cyclohexane diisocyanate.

In addition to their being suitable for the preparation of amides, polyisocyanates may be used for the preparation of compounds which are difficult to synthesize by direct reaction with the acid. Use is then made of an acid or alcohol in a less than stoichiometric amount, so that per polyisocyanate molecule at least one free isocyanate group is left. Such a reaction may be applied to bring about a bond with, for instance, an alcohol which does not readily react with the acid directly. As an example of such an alcohol may be mentioned allyl alcohol, which shows a tendency to polymerize at the high temperature required for esterification.

The temperature at which the reaction between monocarboxylic acid and the isocyanate takes place depends on the reactivity of the components taking part in the reaction. It will generally be in the range of 40° to 250°C. Progress of the reaction can be followed by periodically determining the amount of carbon dioxide evolved. The invention is further described in the following examples.

Example 1

A slurry made up of 17,4 of manganese (III) acetate in 100 ml of acetic anhydride and 84 g (0,6 moles) of 1-decene was added slowly, with stirring, over a period of 1,5 to 5 hours in an atmosphere of nitrogen, to a previously provided mixture of 900 ml (9,5 moles) of acetic anhydride and 42 g (0,3 moles) of 1-decene. The reaction temperature was 125°C, and the stirring speed 800 revolutions per minute. Upon completion of the reaction the mixture was cooled to room temperature and filtered to remove the manganese (II) acetate formed. Subsequently, acetic anhydride, acetic acid formed and unconverted 1-decene were distilled off. To the residue there were added 200 ml of acetic acid and 25 ml of water, and the resulting mixture was heated for 1 hour to 100°C, with vigorous stirring. After distillation of the acetic acid-water mixture the carboxylic acids mixture obtained had the following compositional analysis:

|    | weight % |
|----|----------|
| R1 | 32,1     |
| R2 | 21,2     |
| R3 | 21,9     |
| R4 | 14,4     |
| R5 | 10,3     |

$R_1$ represents the product of the addition of 1 mole 1-decene to 1 mole acetic acid, $R_2$ the product of the addition of 2 moles decene to 1 mole acetic acid, $R_3$ the product of the addition of 3 moles decene to 1 mole acetic acid, etc. The acid number of this mixture of carboxylic acids was 169. This mixture of straight-chain and branched-chain monocarboxylic acids is referred to hereinafter as $TP_{10}$. Upon distillation in a rotary vacuum evaporator of the Leybold KDL—4 type of $R_1$ fraction (= lauric acid) was removed under the following conditions:

| sleeve temperature | 118°C          |
|--------------------|----------------|
| cold finger        | 25°C           |
| metering vessel    | 40°C           |
| pressure           | $10^{-3}$ mm Hg |
| feed rate          | 400 ml/hour    |

After distillation the telomeric acids had the following compositional analysis:

|    | weight % |
|----|----------|
| R1 | 4        |
| R2 | 23       |
| R3 | 32       |
| R4 | 21       |
| R5 | 19       |

The acid number of this telomeric acid mixture was found to be 104.

This mixture of mainly branched-chain monocarboxylic acids is referred to hereinafter as HTA—10.

Analogously, but starting from 1-dodecene, a HTA—12 was prepared having the following compositional analysis:

|    | weight % |
|----|----------|
| R2 | 31,0     |
| R3 | 32,3     |
| R4 | 19,9     |
| R5 | 11,5     |
| R6 | 5,4      |

Finally, starting from 1-hexene, a HTA—6 was prepared having the following compositional analysis:

|   | weight % |
|---|---|
| R1 | 1,2 |
| R2 | 19 |
| R3 | 27 |
| R4 | 19 |
| R5 | 11 |
| R6 | 19 |

The acid number of this mixture of monocarboxylic acids was found to be 160.

Example II

Samples of 50 grammes each of a mixture of monocarboxlyic acids based on 1-hexene (HTA—6) and prepared in accordance with Example I were heated for about 2.5 hours to 180°C in the presence of 0,8, 1,6 or 2,4 g sulphur, respectively. During the reaction nitrogen was passed through the solution. After cooling to about 80°C, a vacuum was applied for 1 hour at this temperature in order as much as possible to remove volatile sulphur compounds.

After completion of the reaction the sulphur content was determined.

The percentages by weight of sulphur uptake were 1,5%, 2,4% and 2,5%, respectively, in the above order of adding the sulphur. Of the resulting sulphurized products 3 and 10% by weight solutions were prepared in the base fluid of a commercially available lubricating oil. The viscosities at the various temperatures (in accordance with ASTM D97—66) are given in the table below.

TABLE I

| Sulphurized HTA—6 wt. % S | Sulphurized HTA—6 | | | |
|---|---|---|---|---|
|  | 3 wt % viscosity in mm²/s at | | 10 wt % viscosity in mm²/s at | |
|  | 40°C | 100°C | 40°C | 100°C |
| 1,5 | 31,9 | 5,36 | 33,2 | 5,47 |
| 2,4 | 31,9 | 5,37 | 33,5 | 5,54 |

viscosity base fluid at     40°C:     31,4 mm²/s

at    100°C:    5,41 mm²/s

This table clearly shows that an increase in the sulphur content has no or hardly any influence on the viscosity of the oil.

Example III

50 grammes of a mixture of monocarboxlyic acids based on 1-decene (HTA—10) in the presence of 1,9 g of sulphur was heated for 2,5 hours to 180°C. During the reaction nitrogen was passed through the solution. After cooling to about 80°C. a vacuum was applied for one hour at this temperature in order as much as possible to remove volatile sulphur compounds. The sulphur content of the resulting mixture was 2,9 per cent by weight. For comparison, a similar experiment was carried out including the successive steps of reacting HTA—10 with sulphur (5 hours, 195°C.), cooling to 150°C and passing through a stream of air for 14 hours at this temperature.

7

**0 032 777**

The sulphur content of the resulting mixture was 3,3 per cent by weight.

Of the sulphurized products thus obtained solutions of 3 and 10 per cent by weight were prepared in a base fluid of a commercially available lubricating oil. The viscosities measured in accordance with ASTM D97—66 at various temperatures are given in the table below.

TABLE II

| Sulphurized HTA—10 wt % | Viscosities in mm²/s of sulphurized HTA—10 in mineral oil | | | |
|---|---|---|---|---|
| | 3 wt % | | 10 wt % | |
| | 40°C | 100°C | 40°C | 100°C |
| 2,9 | 32,2 | 5,43 | 34,5 | 5,75 |
| 3,3 | 32,5 | 5,38 | 34,8 | 5,75 |

viscosity base fluid at 40°C: 31,4 mm²/s

100°C: 5,41 mm²/s

Also from this table it is clear that the influence of the sulphurized products on the viscosity of the oil is only very small.

Example IV

This example describes the preparation and the properties of a few sulphurized telomeric esters.

a. 50 g of a mixture, prepared in accordance with Example I, of monocarboxylic acids based on 1-dodecene (HTA—12), acid number 109,1, 75 g of butanol and 1 g of manganese (III) acetate were heated to 280°C for 240 minutes in an autoclave with vigourous stirring. The resulting mixture was cooled to room temperature and the excess n-butanol removed by distillation. The resulting product was taken up in ether and washed with water to remove manganese (III) acetate. The product taken up in ether was dried over $MgSO_4$ and the ether was removed by distillation.

50 g of butanol ester prepared from the above HTA—12 acid mixture were heated for 2,5 hours at 180°C in the presence of 1,9 g of sulphur and further treated in accordance with the procedure described in Example II. The percentage by weight of sulphur uptake was 2,4.

b. 100 g of a mixture of monocarboxylic acids based on a mixture of $C_{20}$—$C_{24}$ alpha-olefins, acid number 138,5, were heated for 20 hours, with reflexing, in a soxhlet filled with a no.4 molecular sieve. Subsequently, the excess allyl alcohol was removed by distillation under reduced pressure.

50 g of the resulting allyl ester were treated with 20 g of sulphur in accordance with the procedure described in Example II.

The sulphur uptake was 17,7 per cent by weight.

The weight distribution of the mixture of $C_{22}$—$C_{26}$ monocarboxylic acids differed from that of the mixture obtained in accordance with Example I and is given in the following table.

| | wt % |
|---|---|
| R1 | 78 |
| R2 | 6,3 |
| R3 | 6,5 |
| R4 | 4,0 |
| R5 | 3,1 |
| R6 | 2,0 |

8

The distribution was obtained with only 5% of the olefin being present at the start of the reaction. The remainder of the olefin and 0,055 moles of manganese (III) acetate in 160 ml of acetic anhydride were added over a period of 3,5 hours at 120°C.

c. The partial allyl ester of HTA—10 was synthesized in the same way as indicated under *b*. 50 g of this ester were treated with 20 g of sulphur by using the procedure of Example II. The sulphur uptake was 6,5 per cent by weight.

Of the resulting sulphurized products 3 and 10 per cent by weight solutions were prepared in a base fluid of a commercially available lubricating oil. The viscosities measured at various temperatures in accordance with ASTM D97—66 are given in the table below.

TABLE III

| Sulphurized ester wt % S | Viscosities in mm²/s of sulphurized telomeric esters in mineral oil | | | |
|---|---|---|---|---|
| | 3 wt % | | 10 wt % | |
| | 40°C | 100°C | 40°C | 100°C |
| 2,4 | 31,2 | 5,32 | 30,3 | 5,33 |
| 17,7 | 32,6 | 5,45 | 35,7 | 5,86 |
| 6,5 | 31,7 | 5,37 | 31,5 | 5,40 |

viscosity base fluid at       40°C:       31,4  mm²/s

100°C:       5,41  mm²/s

Example V

This example is concerned with the preparation and the properties of a few sulphurized telomeric amides.

a. 50 grammes of a mixture prepared in accordance with Example I of monocarboxylic acids based on 1-decene (HTA—10), acid number 104 and 11,8 grammes of hexyl isocyanate were stirred for 30 minutes in a three-necked flask under an atmosphere of nitrogen and at room temperature. Over a period of 1 hour the temperature was increased from 20°C to 50°C, and subsequently, over a period of 1 hour, to 140°C, at which value it was kept for 1 hour. After the mixture had been heated to 180°C, 1,9 g of sulphur were added to it. The resulting mixture was further treated in accordance with the procedure described in Example II. The sulphur uptake was 2,6 per cent by weight.

b. 102,3 grammes of a mixture, prepared in accordance with Example I, monocarboxylic acids based on 1-decene (TP—10), acid number 169, and 24,9 grammes of toluene diisocyanate were stirred for 30 minutes under an atmosphere of nitrogen and at room temperature.

Over a period of 150 minutes the temperature was increased to 100°C, at which value it was kept for 14 hours. Subsequently, the mixture was heated to 150°C over a period of 120 minutes.

50 grammes of the resulting mixture were sulphurized with 1,9 grammes of sulphur in accordance with the procedure described in Example II. The percentage by weight was 3,6.

The resulting sulphurized products were formed into solutions in a base fluid of a commercially available lubricating oil. The viscosities measured at various temperatures in conformity with ASTM D97—66 are given in the table below.

9

TABLE IV

| Sulphurized amide wt % S | Viscosities in mm$^2$/s of sulphurized telomeric amides in mineral oil | | | |
| | 3 wt % | | 10 wt % | |
| | 40 °C | 100 °C | 40 °C | 100 °C |
|---|---|---|---|---|
| 2,6 | 31,8 | 5,38 | 35,0 | 5,60 |
| 3,6 | 41,1 | 5,72 | – | – |

viscosity base fluid at     40°C :       31,4 mm$^2$/s

100°C :       5,41 mm$^2$/s

**Claims**

1. A process for the preparation of sulphur-containing additives for use in lubricant compositions, in which process an organic carboxylic acid, an ester and/or amide derived therefrom is/are sulphurized, characterized in that the carboxylic acid or the acid from which the ester and/or amide are/is derived is obtained by telomerization under inert conditions of an ethylenically unsaturated compound in the presence of an at least trivalent manganese compound with a carbonyl compound whose alpha-carbon atom carries at least one hydrogen atom, with the proviso that

a. the carbonyl compound contains at least 60% by weight of a carboxylic anhydride;

b. a trivalent manganese compound is present in an amount of 10$^{-3}$ to 10$^{-10}$ moles per liter:

c. the molar ratio of the converted amount of ethylenically unsaturated compounds to said trivalent manganese compound is at least 4.

2. A process according to claim 1, characterized in that for the ethylenically unsaturated compound there is used an alpha-olefin having 6 to 26 carbon atoms.

3. A process according to claim 1, characterized in that the esters are derived from a phenol and/or an aliphatic alcohol having 1 to 50 carbon atoms and 1 to 10 primary or secondary hydroxyl groups and/or a cycloaliphatic alcohol containing 6 to 20 carbon atoms and/or a polyalkylene oxide glycol having 2 to 50 alkylene oxide units having a carbon to oxygen ratio of 2,0 to 4,3.

4. A process according to claim 1, characterized in that prior to sulphurization a compound containing ethylenically unsaturated groups is introduced into the reaction mixture.

5. A process according to claim 4, characterized in that the carboxylic acid is esterified with an alcohol having one or more ethylenically unsaturated groups.

6. A process according to claim 5, characterized in that the alcohol is allyl alcohol.

**Patentansprüche**

1. Ein Verfahren zur Herstellung von Schwefel enthaltenden Zusätzen zur Verwendung in Schmiermittelzusammensetzungen, in welchem Verfahren eine organische Carbonsäure, deren sich davon ableitende Ester und/oder deren sich davon ableitendes Amid geschwefelt wird(werden), dadurch gekennzeichnet, daß die Carbonsäure oder die Säure, von der sich der Ester und/oder das Amid ableitet(ableiten), durch Telomerisation unter inerten Bedingungen einer äthylenisch ungesättigten Verbindung, in Gegenwart einer mindestens dreiwertigen Manganverbindung mit einer Carbonylverbindung erhalten wird, dessen $\alpha$-Kohlenstoffatom mindestens ein Wasserstoffatom trägt, mit der Maßgabe, daß

a) die Carbonylverbindung mindestens 60 Gewichtsprozent eines Carbonsäureanhydrids enthält;

b) eine dreiwertige Manganverbindung in einer Menge von 10$^{-3}$ bis 10$^{-10}$ Mol/Liter vorliegt;

c) das Molverhältnis der umgewandelten Menge der äthylenisch ungesättigten Verbindung zu der besagten dreiwertigen Manganverbindung mindestens 4 ist.

2. Ein Verfahren gemäß Anspruch 1, dadurch gekennzeichnet, daß für die äthylenisch ungesättigte Verbindung eine $\alpha$-Olefin mit 6 bis 26 Kohlenstoffatomen verwendet wird.

3. Ein Verfahren gemäß Anspruch 1, dadurch gekennzeichnet, daß sich die Ester von einem Phenol und/oder einem aliphatischen Alkohol mit 1 bis 50 Kohlenstoffatomen und 1 bis 10 primären oder sekundären Hydroxylgruppen und/oder einem cycloaliphatischen Alkohol mit 6 bis 20 Kohlen-

**0 032 777**

stoffatomen und/oder einem Polyalkylenoxidglycol mit 2 bis 50 Alkylenoxid-Einheiten mit einem Kohlenstoff-zu-Sauerstoffverhältnis von 2,0 bis 4,3 ableiten.

4. Ein Verfahren gemäß Anspruch 1, dadurch gekennzeichnet, daß vor der Schwefelung eine äthylenisch ungesättigte Gruppen enthaltende Verbindung in das Reaktionsgemisch eingebracht wird.

5. Ein Verfahren gemäß Anspruch 4, dadurch gekennzeichnet, daß die Carbonsäure mit einem Alkohol mit einer oder mehreren äthylenische ungesättigten Gruppe(n) verestert wird.

6. Ein Verfahren gemäß Anspruch 5, dadurch gekennzeichnet, das der Alkohol Allylalkohol ist.

## Revendications

1. Un procédé pour la préparation d'additifs contenant du soufre pour utilisation dans des compositions lubrifiantes, dans lequel on sulfure un acide carboxylique organique, un ester et/ou un amide d'un tel acide, caractérisé en ce que l'acide carboxylique ou l'acide duquel l'ester et/ou l'amide sont dérivés est obtenu par télomérisation dans des conditions inertes d'un composé éthyléniquement insaturé en présence d'au moins un composé du manganèse trivalent avec un composé carbonylé dont l'atome de carbone alpha porte au moins un atome d'hydrogène, avec les conditions que:

a) le composé carbonylé contient au moins 60% en poids d'un anhydride carboxylique;

b) un composé du manganèse trivalent est présent à raison de $10^{-3}$ à $10^{-10}$ mole par litre;

c) le rapport molaire de la quantité transformée des composés éthyléniquement insaturés au composé du manganèse trivalent est d'au moins 4.

2. Un procédé selon la revendication 1, caractérisé en ce que comme composé éthyléniquement insaturé on utilise une alpha-oléfine ayant 6 à 26 atomes de carbone.

3. Un procédé selon la revendication 1, caractérisé en ce que les esters sont dérivés d'un phénol et/ou d'un alcool aliphatique ayant 1 à 50 atomes de carbone et 1 à 10 groupes hydroxyle primaires ou secondaires et/ou d'un alcool cyclo-aliphatique contenant 6 à 20 atomes de carbone et/ou d'un poly-oxyalcoylène-glycol ayant 2 à 50 mailles d'oxyde d'alcoylène ayant une rapport carbone/oxygène de 2,0 à 4,3.

4. Un procédé selon la revendication 1, caractérisé en ce qu'avant la sulfuration un composé contenant des groupes éthyléniquement insaturés est introduit dans le mélange réactionnel.

5. Un procédé selon la revendication 4, caractérisé en ce que l'acide carboxylique est estérifié avec un alcool ayant un ou plusieurs groupes éthyléniquement insaturés.

6. Un procédé selon la revendication 5, caractérisé en ce que l'alcool est l'alcool allylique.

11